# EUROPÄISCHE PATENTSCHRIFT

(11) **EP 1 402 587 B1**
(45) Veröffentlichungstag und Bekanntmachung des Hinweises auf die Patenterteilung: **06.10.2004**
(21) Anmeldenummer: 02758237.8
(22) Anmeldetag: 18.06.2002
(51) Int. Cl.: H01M 4/88

(54) **VERFAHREN ZUM HERSTELLEN VON GASDIFFUSIONSELEKTRODEN**
METHOD FOR PRODUCING GAS DIFFUSION ELECTRODES
PROCEDE POUR LA PRODUCTION D'ELECTRODES A DIFFUSION GAZEUSE

(30) Priorität: 23.06.2001 DE 10130441
(43) Veröffentlichungstag der Anmeldung: 31.03.2004
(73) Patentinhaber: Uhde GmbH, 44141 Dortmund (DE); Gaskatel GmbH, 34127 Kassel (DE)
(72) Erfinder: JANOWITZ, Kosmas, 44269 Dortmund (DE); DRESEL, Torsten, 58093 Hagen (DE); WOLTERING, Peter, 48485 Neuenkirchen (DE); BECKMANN, Roland, 44534 Lünen (DE); STEINMETZ, Thomas, 44139 Dortmund (DE); KIEFER, Randolf, 44892 Bochum (DE); DULLE, Karl-Heinz, 50399 Olfen (DE); FUNCK, Frank, 45472 Mülheim (DE); KOHNKE, Hans-Joachim, 34123 Kassel (DE)
(74) Vertreter: Patentanwälte Meinke, Dabringhaus und Partner
(86) Internationale Anmeldenummer: PCT/EP2002/006706
(87) Internationale Veröffentlichungsnummer: WO 2003/004726

(56) Entgegenhaltungen:
- US-A- 4 585 711
- US-A- 4 603 118
- US-A- 5 364 712

## Beschreibung

Die vorliegende Erfindung betrifft ein Verfahren zur Herstellung von porösen Gasdiffusionselektroden der in Anspruch 1 angegebenen Gattung. Eine solche Gasdiffusionselektrode kann z.B. auf einem katalytisch aktiven Silber oder Silberlegierungen für den Einsatz in elektrochemischen Zellen, insbesondere der Chlor-Alkali-Elektrolyse, oder alkalischen Brennstoffzellen basieren.

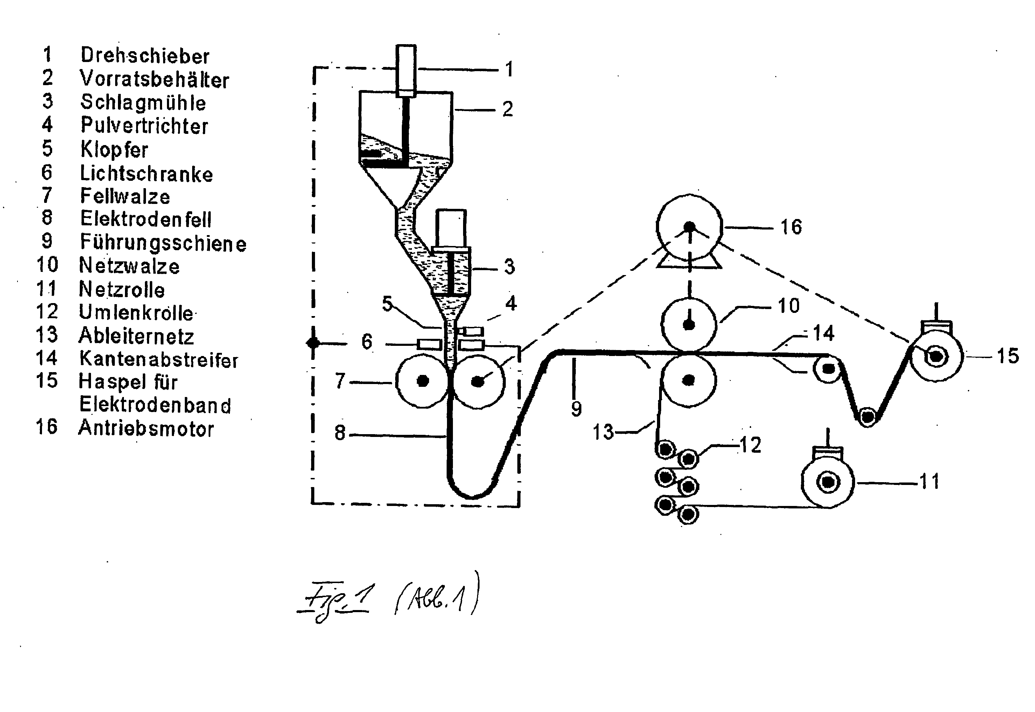

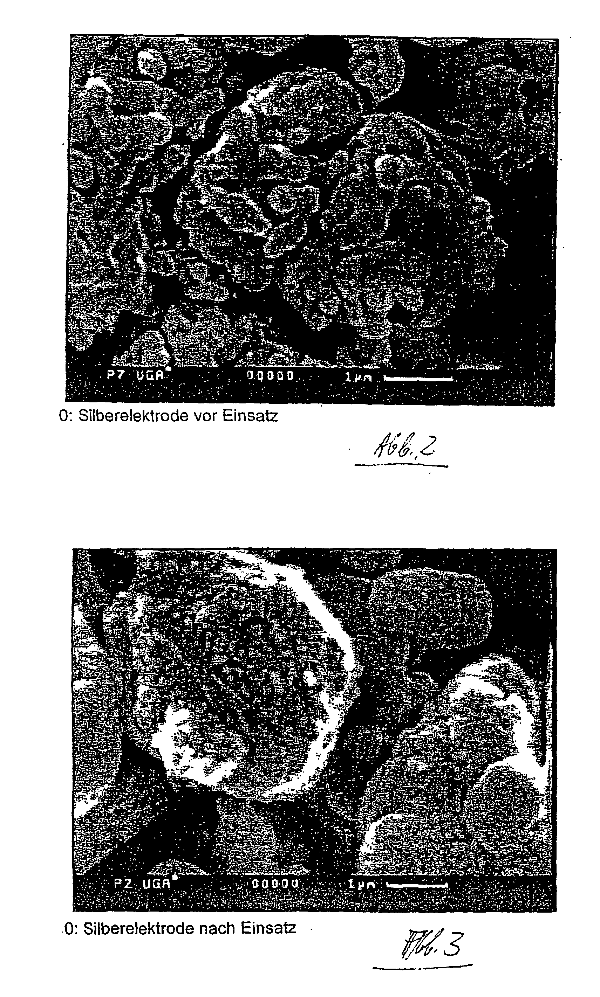

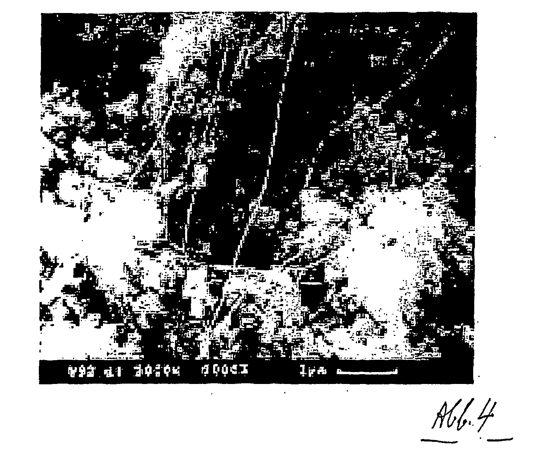

In elektrochemischen Zellen wird die Reduktion von Sauerstoff an Platin, Silber oder auch Kohlenstoff durchgeführt. Platin ist sowohl in saurer als auch in alkalischer Umgebung einsetzbar, wohingegen Silber und Kohlenstoff nur in alkalischen Elektrolyten korrosionsstabil sind. Jedoch tritt im Falle des Silberkatalysators auch in alkalischen Medien eine rasche Deaktivierung auf, die durch Umlagerung der oxidischen Oberfläche des Silbers erklärt wird. (Texas Instruments, US 35 05 120). Es ist vielfach versucht worden, den korrosiven Angriff des Silbers durch geeignete Legierungspartner zu vermindern. Dabei sind sowohl Legierungen mit edleren Materialien Platin, Palladium, Gold und Quecksilber (DE 20 21 009), aber auch mit unedleren Stoffen, wie Nickel (DE 15 46 728), Kupfer und anderen bekannt. Es ist auch versucht worden, eine Stabilisierung des Silbers sowohl durch Veredelung als auch durch anodischen Korrosionsschutz (Lokalelement) zu erreichen. Bei der Korrosion bildet sich zunächst eine Silberoxid-Oberfläche. Weil Silberoxid in Laugen relativ gut löslich ist, kann damit eine Umordnung des Silberkristalls stattfinden. In der Abbildung 2 und 3 sind REM-Aufnahmen von Silberelektroden vor und nach Betrieb dargestellt. Sehr deutlich ist die Abnahme der inneren Porenstruktur zu erkennen. Die katalytische Aktivität sinkt.

Neben der Stabilisierung muß das Verfahren zur Herstellung eines aktiven Silberkatalysators auch gewährleisten, daß die aktive Oberfläche des Silbers hinreichend groß ist, d.h. die Korngröße des Silbers möglichst klein ist. So ist zum Beispiel aus der Schrift (US 3 668 101) bekannt, daß sehr aktive Silberkatalysatoren bei Teilchendurchmesser von 5 bis 10 µm Größe erreicht werden.

Weiterhin sind Verfahren bekannt, bei denen versucht wird, kleinste Teilchen von stabilen Silberlegierungen herzustellen. Hinreichend kleine Silberpartikel werden in Fällungsprozeduren erzeugt. Neben der Kontrolle des pH-Wertes, der Temperatur und der Übersättigung, spielen sogenannte Kristallisationskeime eine herausragende Rolle, um kleinste Silberpartikel herzustellen. Bekannt ist ein Verfahren (EP 0 115 845), bei dem eine Mischung aus Silbernitrat und Quecksilbernitrat auf einer PTFE-Dispersion durch Zugabe von Kalilauge niedergeschlagen wird. Hiermit wird ein Silberamalgam mit kleinstem Teilchendurchmesser hergestellt.

Um aus diesen Katalysatoren sogenannte Gasdiffusionselektroden herzustellen, wie sie in Brennstoffzellen oder in der Chlor-Alkali-Elektrolyse benötigt werden, müssen die Pulver zu einer homogenen, flächigen Elektrode verarbeitet werden. Diese Elektrode muß elektrisch leitend sein und sowohl den Eintritt von Elektrolyt als auch Gas ermöglichen. Es müssen also Bereiche der Elektrode benetzt werden können, wohingegen andere Bereiche vor Benetzung geschützt werden müssen. Eine Lösung dieses Problems wurde mit einer biporösen Porenstruktur dargestellt. Der Elektrolyt kann zunächst mühelos sowohl in die kleinen als auch in die großen Poren eindringen. Durch einen Überdruck des Gases oder die Gravitationskraft wird der Elektrolyt wieder aus den größeren Poren entfernt. Solche biporösen Strukturen arbeiten nur dann zufriedenstellend, wenn eine Druckdifferenz zwischen Gasraum und Elektrolytraum vorliegen kann. Ob sich solche Druckdifferenzen aufbauen können, wenn im Elektrolyten eine Membran die Anode und Kathode voneinander trennt, ist fraglich. Damit werden diese Elektroden in der Chlor-Alkali-Elektrolyse oder in Brennstoffzellen mit alkalischen Membranen nicht verwandt werden können.

Daher wurde versucht, über die Materialeigenschaften ein biporöses Porensystem aufzubauen. Das heißt, man benötigt hydrophile und hydrophobe Materialien. Geeignete hydrophobe Materialien sind einige Thermoplaste - wie zum Beispiel Polytetrafluorethlyen. Die genannten Katalysatoren und eben auch das Silber sind stets hydrophil. Mischt man also Silber und PTFE zusammen und formt daraus eine ebene Elektrode, so weist diese unterschiedliche Bereiche mit hydrophilen und hydrophoben Eigenschaften auf. Meist wird ein zusätzlicher metallischer Ableiter integriert, um bessere elektrische Eigenschaften zu erzielen.

Es sind einige Verfahren bekannt, aus Mischungen von PTFE (Polytetrafluorethylen) und Katalysator eine sogenannte Gasdiffusionselektrode herzustellen. So wird zum Beispiel in der Schrift (EP 0 115 845) vorgeschlagen, die Materialien in der Art aufzuschlemmen, daß man eine Paste erhält, die in Form gegossen, gepreßt und getrocknet werden kann. Nachteilig bei solchen "pastierten" Elektroden ist die inhomogene Verteilung des Materials - es kann leicht kleine Löcher ergeben, durch die dann Gas oder Elektrolyt dringen kann. Um dies zu verhindern, werden die Elektroden mindestens 0.8 mm dick hergestellt. Dadurch befinden sich sehr hohe Silbermengen in der Elektrode (um 2 kg/m²), so daß der Preisvorteil des Silbers wieder verloren gegangen ist. Denn es sind kommerzielle Sauerstoffelektroden mit ca. 4 - 40 g/m² Platin/Kohlenstoff bekannt.

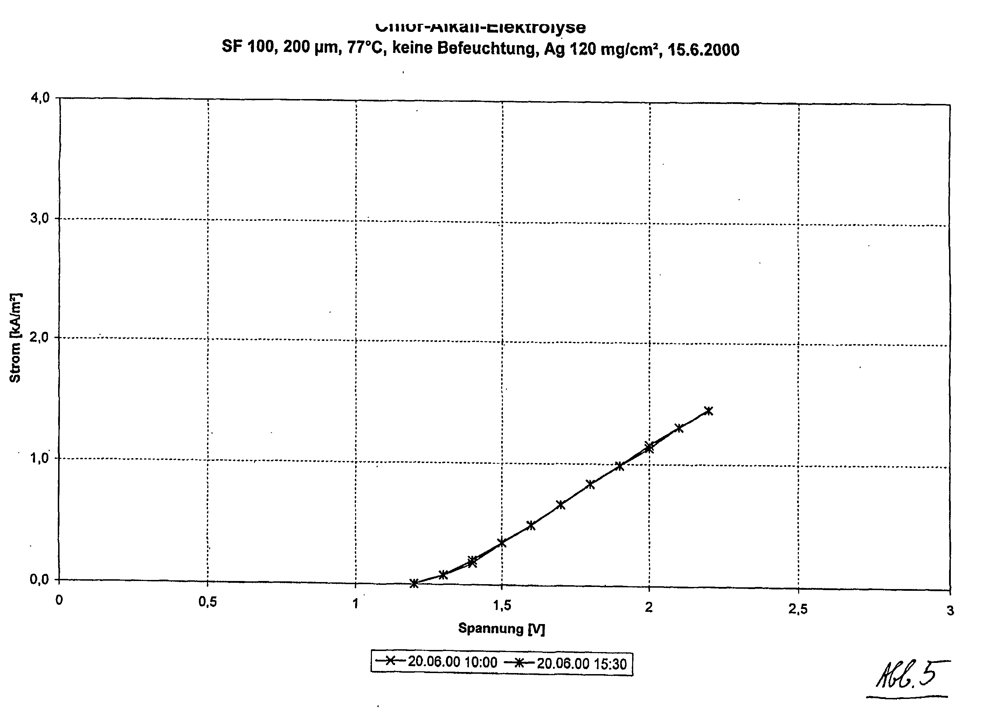

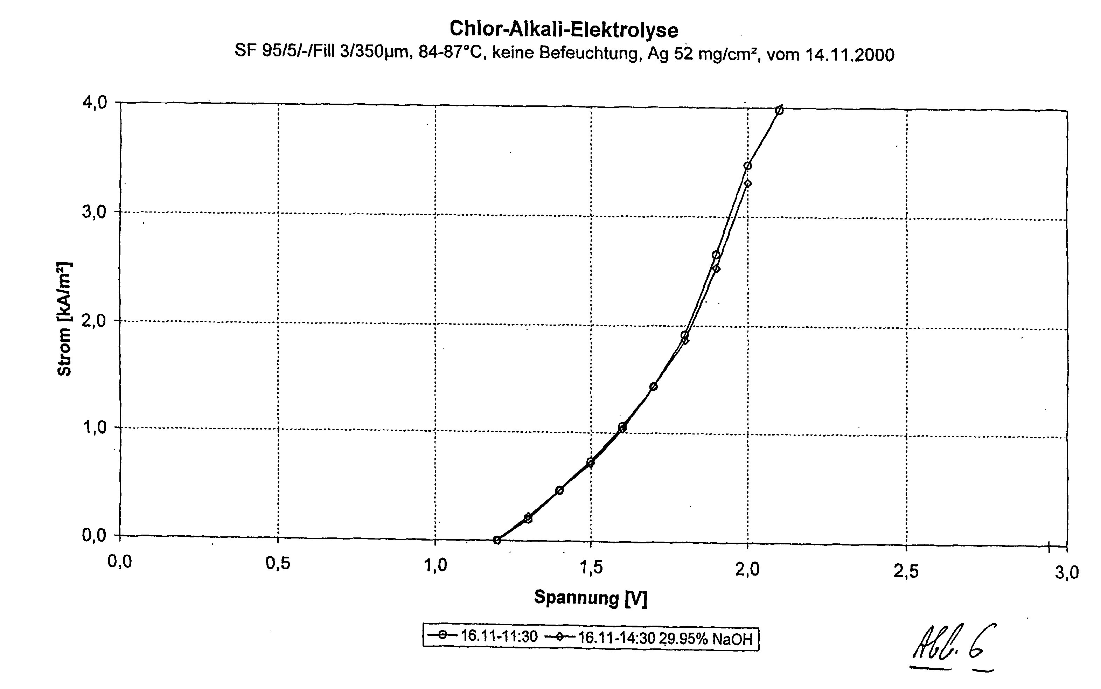

Es sind zwei Verfahren bekannt, bei denen aus solchen hydrophoben/hydrophilen Materialien eine dünne, homogene Gasdiffusionselektrode gewalzt wird. Nach dem Verfahren (EP 0 144 002, US 4 696 872) werden in einem speziellen Mischer die Katalysatorpartikel und das PTFE so miteinander vermischt, daß sich ein feinmaschiges hydrophobes Netzsystem auf dem Katalysator niederschlägt. In einer Pulverwalze wird die lose geschüttete Masse zu einer Folie von ca. 0.2 mm Dicke zusammengewalzt. Bewährt hat sich dieses Verfahren für Mischungen aus PTFE und Kohlenstoff, oder PTFE und Raney-Nickel. Es ist ebenfalls möglich, damit eine Raney-Silber-Legierung mit 80% Aluminium zu einer porösen Folie auszuwalzen. Dargestellt ist ein solches Kalanderwalzwerk in der Abbildung 1. Jedoch ist es nicht möglich das duktile Silber zu verarbeiten. Bei dem nötigen Anpreßdruck - ca. 0.01 bis 0.6 t/cm² - in solchen Pulverwalzen werden PTFE und Silber zu einer kompakten, gas- und elektrolytundurchlässigen Folie verpreßt. Die Strom-Spannungskennlinie einer solchen Elektrode ist in Abbildung 5 zu sehen.

Um dennoch Silberelektroden herstellen zu können, wird zunächst ein Silberoxid/PTFE-Gemisch in der Pulverwalze verarbeitet und anschließend elektrochemisch reduziert (DE 37 10 168). Das Silberoxid ist stabil genug, um dem Anpreßdruck der Walzen zu widerstehen. Außerdem verringert sich das Volumen beim Übergang von Silberoxid zum Silber, so daß zusätzliche Poren in der Gasdiffusionselektrode entstehen. Durch die Parameter beim Reduzieren kann die Korngröße der Teilchen recht gut eingestellt werden. Nachteilig bei diesem Verfahren ist, daß es bisher nicht bekannt ist, wie Silberlegierungen mit katalytischen Eigenschaften elektrochemisch reduziert werden können. Damit ist es also nicht möglich, über die elektrochemische Reduktion langzeitstabile Silberelektroden herzustellen.

Die Aufgabe der vorliegenden Erfindung besteht darin, ein Verfahren zur Herstellung einer Gasdiffusionselektrode bereitzustellen, mit dem nicht nur die Nachteile des Standes der Technik vermieden wird, sondern sich insbesondere reproduzierbare Ergebnisse beim Verfahrensprodukt einstellen.

Mit einem Verfahren der eingangs bezeichneten Art wird diese Aufgabe gemäß der Erfindung dadurch gelöst, daß
- das Porensystem des Silberkatalysators mit einer benetzenden Flüssigkeit gefüllt,
- ein dimensionsstabiler Festkörper mit einer Korngröße oberhalb der des Silberkatalysators unter den Silberkatalysator gemischt,
- diese somit kompressionsstabile Masse in einem Kalander zu einem homogenen Katalysatorband ausgeformt wird und
- in einem zweiten Kalanderschritt ein elektrisch leitfähiges Ableitermaterial in das Katalysatorband eingeprägt wird.

Die Besonderheit des erfindungsgemäßen Verfahren liegt nun darin, das innere Porensystem der duktilen Materialien mit einer Flüssigkeit zu füllen. Weil sich diese Flüssigkeit nicht verdichten läßt und andererseits über die Kapillarkräfte fest in dem Porensystem gebunden ist, kann auch bei dem vorliegenden Druck von maximal 600 kg/cm² die Flüssigkeit nicht aus den Mikroporen entfernt werden. Eine weitere Zugabe von etwas Kohlenstoffpulver oder dem flüchtigen Ammoniumcarbonat kann weiterhin den mechanischen Druck der Pulverwalzen auffangen. Durch diese grobkörnigen Zugaben von typisch 10 - 100 µm Korndurchmesser wird das Porensystem mit größerem Porendurchmesser vor der Verdichtung geschützt. Durch einen anschließenden Temperungsschritt kann sowohl die Flüssigkeit als auch der Feststoff Ammoniumcarbonat aus der Elektrode getrieben werden. Auf diese Weise können in der Gasdiffusionselektrode große Poren erhalten werden, die für den schnellen Gastransport sorgen und kleinere Poren im Katalysator, die eine homogene Ausnutzung des Katalysators erlauben.

Eine bevorzugte Durchführung dieses Verfahrens wird wie folgt dargestellt: Zunächst wird Silber oder eine Silberlegierung durch einen Fällungsprozeß hergestellt. Dabei ist es vorteilhaft, die Fällung auf einer PTFE-Dispersion durchzuführen. Die besten Erfahrungen werden mit einer Mischung von 15% Teflon und 85% Silber gemacht. Durch Zugabe von Formaldehyd beim Fällen wandelt sich in der alkalischen Umgebung das Silberhydroxid sofort in ein Silberkristall um. Die Fällmasse wird gewaschen und getrocknet. Eine anschließende Temperung bei 200°C verbessert den elektrischen Kontakt zwischen den Silberteilchen und treibt die restlichen Flüssigkeiten aus.

Zu diesem Pulver wird eine Menge von etwa 5% - 40%, vorzugsweise jedoch 8%, einer Flüssigkeit gegeben, die in das Porensystem des PTFE's und des Silbers eindringen kann. Wegen des hydrophoben Charakters des PTFE's kommen dazu nur Isopropanol, Äthanol und Methanol in Frage. Ist das Pulver mit solchen Lösungsmitteln benetzt und gefüllt, so kann sich hieran ein Austausch der Flüssigkeiten anschließen. Bringt man zum Beispiel ein Pulver getränkt in Isopropanol in ein Wasserbad, oder Glycerin, so tauschen sich innerhalb von Stunden die Flüssigkeiten über Diffusion aus. Auf diese Weise gelangt eine Flüssigkeit in das Porensystem des PTFE's, die üblicherweise von dem PTFE abgestoßen wird. Dieses so befeuchtete Material verhält sich nach außen hin wie ein Pulver, weil sich nur im inneren Porensystem die Flüssigkeit befindet.

Eine andere Gattung der Benetzungsmittel sind die sogenannten Tenside. Diese dringen sowohl in das Porensystem ein, bedecken aber auch die Oberfläche des Katalysators und setzen so dessen Oberflächenrauhigkeit herab. Diese geringere Oberflächenrauhigkeit führt nun im Walzprozeß dazu, daß der Silberkatalysator aus der Verdichtungszone ausweichen kann, während andere Pulverbestandteile, die nicht behandelt worden sind, in der Verdichtungszone verbleiben und so den Elektrodenverband herstellen, in dem der Silberkatalysator eingebettet ist (Abbildung 4). Als ein solches Pulver bietet sich Ammoniumcarbonat oder Aktivkohle an, welches nun mit dem Silberkatalysator in einer Mühle, wie sie in EP 0 144 002 beschrieben ist, zu einer homogenen Masse vermischt werden. Anschließend wird die lose geschüttete Masse mittels einer Pulverwalze zu einer ca. 0.2 mm dicken Folie ausgewalzt.

In einem zweiten Walzenpaar kann ein metallisches Stützgerüst in der Form von gewebten Netzen oder Streckmetallen eingewalzt werden und somit die mechanische Stabilität und die elektrische Leitfähigkeit verbessern. Nach diesem Vorgang wird die Gasdiffusionselektrode getrocknet. Danach hat die Elektrode eine Silberbelegung zwischen 0.2 kg/m² und 1.5 kg/m². Üblicherweise wird ein Gewicht von ca. 0.5 kg/m² angestrebt. Damit kann bis zu 75% des bisher nötigen Silbers eingespart werden. Trotz des reduzierten Silbergewichtes ergeben sich mit solchen Elektroden Strom-Spannungskennlinien wie sie in Abbildung 6 zu sehen sind.

Dieses Verfahren läßt sich selbstverständlich auch mit anderen kombinieren. So kann auch auf das umweltschädliche Formaldehyd bei der Fällung verzichtet werden und dafür die Reduktion nach der Herstellung der GDE über elektrochemischen Weg vollzogen werden. Es lassen sich ebenfalls Legierungen herstellen, indem eine Ko-Ausfällung von Silber und Quecksilber, Titan, Nickel, Kupfer, Kobalt oder Bismut durchgeführt wird.

Speziell für die Chlor-Alkali-Elektrolyse können an der fertigen Gasdiffusionselektrode Änderungen vorgenommen werden, die einen besseren Abtransport der entstehenden Natronlauge ermöglichen. Dazu wäre zum Beispiel die Einprägung eines groben Ableitungssystems angeraten. Möglich ist dies, wenn auf die fertige Elektrode ein Netz gepreßt und anschließend wieder abgezogen wird. Der Negativ-Abdruck des Netzes bildet Kanäle, in denen der Elektrolyt später parallel zur Elektrodenoberfläche abfließen kann.

Weiter Merkmale, Einzelheiten und Vorteile der Erfindung ergeben sich aufgrund der nachfolgenden Abbildungen. Diese zeigen in
- Fig. 1: (Abb. 1) ein Funktionsschaubild einer erfindungsgemäßen Anlage,
- Abb. 2: eine mikroskopische Aufnahme einer Silberelektrode vor dem Einsatz,
- Abb. 3: in gleicher Darstellungsart eine Silberelektrode nach dem Einsatz,
- Abb. 4: ein in einen Silberkatalysator eingebettetes PTFE-Gerüst,
- Abb. 5: ein Strom/Spannungsdiagramm einer Chlor-Alkali-Elektrolyse sowie in
- Abb. 6: die gleiche Kurve nach Maßgabe der Erfindung.

## Patentansprüche

1. Verfahren zur Herstellung einer Gasdiffusionselektrode aus einem Silberkatalysator auf PTFE-Substrat,
**dadurch gekennzeichnet, daß**
- das Porensystem des Silberkatalysators mit einer benetzenden Flüssigkeit gefüllt,
- ein dimensionsstabiler Festkörper mit einer Korngröße oberhalb der des Silberkatalysators unter den Silberkatalysator gemischt,
- diese somit kompressionsstabile Masse in einem Kalander zu einem homogenen Katalysatorband ausgeformt wird und
- in einem zweiten Kalanderschritt ein elektrisch leitfähiges Ableitermaterial in das Katalysatorband eingeprägt wird.

2. Verfahren nach Anspruch 1,
**dadurch gekennzeichnet,**
**daß** als benetzende Flüssigkeit 5% Isopropanol und als Feststoff 30% Ammoniumcarbonat oder Ammoniumhydrogencarbonat eingesetzt wird und diese beiden Füllstoffe nach der Elektrodenherstellung durch einen Temperungsschritt bei vorzugsweise 110°C ausgetrieben werden.

3. Verfahren nach Anspruch 1,
**dadurch gekennzeichnet,**
**daß** als benetzende Flüssigkeit ein Tensid - vorzugsweise 5% Triton X 100 - eingesetzt wird, welches sowohl in das Porensystem des Katalysators eindringt aber auch die Oberflächenreibung herabsetzt, so daß der Silberkatalysator aus der Verdichtungszone herausgleiten kann und das dimensionsstabile Ammoniumcarbonat und der PTFE-Binder den Walzendruck auffangen.

4. Verfahren insbesondere nach Anspruch 1,
**dadurch gekennzeichnet,**
**daß** im ersten Kalanderschritt ein homogenes Katalysatorband in einer Dicke von 0,2-0,5 mm hergestellt wird.

5. Verfahren nach einem der vorangehenden Ansprüche,
**dadurch gekennzeichnet,**
**daß** der Walzenspalt auf 350 µm und der Walzenvorschub auf ca. 2 Meter pro Minute eingestellt wird.

6. Verfahren nach einem der vorangehenden Ansprüche,
**dadurch gekennzeichnet,**
**daß** als elektrisches Ableitermaterial ein versilbertes Nikkeldrahtgewebe mit der Fadenstärke 0.15 mm und der Maschenweite 0.45 mm mit einer ca. 10 µm dicken Silberbelegung eingesetzt wird.

## Claims

1. A process for the production of a gas diffusion electrode from a silver catalyst on a PTFE substrate, **characterised in that**
- the pore system of the silver catalyst is filled with a wetting liquid,
- a dimensionally stable solid body with a grain size above that of the silver catalyst is mixed among the silver catalyst,
- that mass which is thus stable in respect of compression is shaped in a calender to form a homogeneous catalyst strip, and
- in a second calendering step an electrically conductive discharge conductor material is impressed into the catalyst strip.

2. A process according to claim 1 **characterised in that** 5% isopropanol is used as the wetting liquid and 30% ammonium carbonate or ammonium hydrogen carbonate is used as the solid and those two fillers are expelled after electrode production by a heat treatment step at preferably 110°C.

3. A process according to claim 1 **characterised in that** a tenside - preferably 5% Triton X 100 - is used as the wetting liquid, which both penetrates into the pore system of the catalyst but also reduces surface friction so that the silver catalyst can slide out of the compacting zone and the dimensionally stable ammonium carbonate and the PTFE binder absorb the rolling pressure.

4. A process in particular according to claim 1 **characterised in that** in the first calender step a homogeneous catalyst strip of a thickness of 0.2 - 0.5 mm is produced.

5. A process according to one of the preceding claims **characterised in that** the rolling gap is set to 350 µm and the rolling advance is set to about 2 metres per minute.

6. A process according to one of the preceding claims **characterised in that** a silver-plated nickel wire mesh of a wire thickness of 0.15 mm and a mesh width of 0.45 mm with a silver covering of about 10 µm in thickness is used as the electrical discharge conductor material.

## Revendications

1. Procédé de fabrication d'une électrode à diffusion gazeuse à partir d'un catalyseur à l'argent sur un substrat en PTFE, **caractérisé en ce que**
- le système poreux du catalyseur à l'argent est rempli d'un liquide mouillant,
- un solide de dimensions stables ayant une granulométrie supérieure à celle du catalyseur à l'argent est mélangé sous le catalyseur à l'argent,
- cette masse ainsi rendue stable à la compression est formée dans une calandre en une bande de catalyseur homogène, et
- dans une deuxième étape de calandrage, un matériau de décharge électriquement conducteur est intégré dans la bande de catalyseur.

2. Procédé selon la revendication 1, **caractérisé en ce que** l'on utilise comme liquide mouillant 5% d'isopropanol et comme solide 30% de carbonate d'ammonium ou d'hydrogénocarbonate d'ammonium et, une fois l'électrode réalisée, ces deux matières de charge sont chassées par une étape de trempe, de préférence à 110°C.

3. Procédé selon la revendication 1, **caractérisé en ce que** l'on utilise comme liquide mouillant un agent tensio-actif ― de préférence 5% de Triton X 100 - qui non seulement pénètre dans le système poreux du catalyseur mais aussi diminue le frottement superficiel de façon que le catalyseur à l'argent peut glisser hors de la zone de densification et le carbonate d'ammonium de dimensions stables et le liant PTFE absorbent la pression de laminage.

4. Procédé, en particulier selon la revendication 1, **caractérisé en ce que** l'on prépare dans une première étape de calandrage une bande de catalyseur homogène ayant une épaisseur de 0,2 à 0,5 mm.

5. Procédé selon l'une des revendications précédentes, **caractérisé en ce que** l'écartement des cylindres est réglé à 350 µm et la vitesse d'avance des cylindres à environ 2 mètres par minute.

6. Procédé selon l'une des revendications précédentes, **caractérisé en ce que** l'on utilise comme matériau de décharge conducteur une toile de fil de nickel argenté ayant un diamètre de fil de 0,15 mm et une largeur de maille de 0,45 mm avec une épaisseur de dépôt de l'argent d'environ 10 µm.
